# EUROPÄISCHE PATENTSCHRIFT

(11) **EP 3 825 015 B1**
(45) Veröffentlichungstag und Bekanntmachung des Hinweises auf die Patenterteilung: **29.03.2023**
(21) Anmeldenummer: 20208580.9
(22) Anmeldetag: 19.11.2020
(51) Int. Cl.: B06B 1/06, G01H 5/00, G01H 11/08, G01F 1/66, G01F 15/00, G01P 5/24

(54) **ULTRASCHALLEINHEIT ZUR KOPPLUNG VON ULTRASCHALLWELLEN IN EIN UND/ODER AUS EINEM MEDIUM**
ULTRASONIC UNIT FOR COUPLING ULTRASONIC WAVES INTO AND FROM A MEDIUM
UNITÉ À ULTRASONS PERMETTANT DE COUPLER LES ONDES ULTRASONORES DANS UN ET/OU À PARTIR D'UN SUPPORT

(30) Priorität: 22.11.2019 DE 102019218033
(43) Veröffentlichungstag der Anmeldung: 26.05.2021
(73) Patentinhaber: Fraunhofer-Gesellschaft zur Förderung der angewandten Forschung e.V., 80686 München (DE)
(72) Erfinder: Waschkies, Thomas, 66123 Saarbrücken (DE); Brosta, Nico, 66123 Saarbrücken (DE); Dengiz, Nizamettin, 66123 Saarbrücken (DE); Di Gregorio, Giuseppe, 66123 Saarbrücken (DE); Reimsbach, Nils, 66123 Saarbrücken (DE); Reuther, Andrea, 66123 Saarbrücken (DE)
(74) Vertreter: Rösler, Uwe

(56) Entgegenhaltungen:
- DE-A1-102011 090 082
- RU-C1- 2 237 982
- US-A- 3 925 692
- US-A1- 2007 232 919

## Beschreibung

### Technisches Gebiet

Die Erfindung betrifft eine Ultraschalleinheit zur Kopplung von Ultraschallwellen in ein und/oder aus einem Medium, umfassend einen an eine Elektronikeinheit elektrisch kontaktierten Ultraschallwandler, der mittel- oder unmittelbar mit einem als Wellenleiter ausgebildeten Koppelmedium verbunden ist.

### Stand der Technik

Eine gattungsgemäß ausgebildete Ultraschalleinheit zur Kopplung von Ultraschallwellen in ein bzw. aus einem Medium ist in der Druckschrift

DE 10 2007 027 392 B3 offenbart und dient zur Bestimmung der Geschwindigkeit einer strömenden Schmelze in einem Temperaturbereich oberhalb von 200°C. Die bekannte Ultraschalleinheit sieht einen Ultraschallwandler in Form eines piezoelektrischen Wandlers mit zugehörigen elektronischen Komponenten vor, die der Steuerung des Ultraschallwandlers und internen Aufbereitung, Anpassung und Auswertung der Signale dienen. Der piezoelektrische Ultraschallwandler ist dauerhaft fest mit einem stabförmigen, dispersionsarmen Ultraschallwellenleiter verbunden, der zudem von einem weitgehend thermostabilen Schutzmantel umgeben ist. Der piezoelektrische Ultraschallwandler, die elektrischen Komponenten für die Signalanpassung sowie auch ein oberer Teilbereich des stabförmigen Ultraschallwellenleiters sind von einem mit einem Kühlmittel durchströmbaren Schutzgehäuse umfasst.

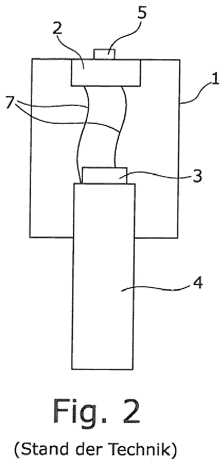

Figur 2 zeigt einen schematischen Aufbau einer an sich bekannten Ultraschalleinheit, wie sie auch aus der vorstehenden Druckschrift hervorgeht. Innerhalb eines Schutzgehäuses 1 sind eine Elektronikeinheit 2 sowie ein mit dieser im Wege einer festen Verdrahtung 7 elektrisch verbundener Ultraschallwandler 3, vorzugsweise in Form eines piezoelektrischen Schallwandlers untergebracht, der stirnseitig fest mit einem ansonsten stabförmig ausgebildeten Ultraschallwellenleiter 4 verbunden ist. Über eine an der Gehäuseaußenseite des Schutzgehäuses 1 angebrachte Steckverbindung 5 erfolgt eine Signalzu- bzw. -ableitung von bzw. an eine nicht dargestellte externe Steuer-/Kontrolleinheit.

Die bekannte Ultraschalleinheit ist jedoch aus verschiedenen Gründen nachteilhaft, insbesondere in Fällen, in denen der als Einkoppelmedium dienende Ultraschallwellenleiter 4 beispielsweise in stark korrodierenden Medien, wie beispielsweise Aluminiumschmelzen, zum Zwecke einer Ultraschallwellenkopplung eingesetzt wird und einer unvermeidbaren Materialdegradation unterliegt. Dies hat zur Folge, dass die Ultraschalleinheit in regelmäßigen Abständen zu tauschen ist, d.h. der mit der Ultraschalleinheit durchgeführte Mess- oder Überwachungsprozess ist montagebedingt zeitlich zu unterbrechen, um einen Austausch vornehmen zu können. Es liegt auf der Hand, dass eine derartige Maßnahme zeit- und kostenaufwändig ist und somit nachteilhaft für den Nutzer ist.

Die Druckschrift DE 10 2011 090 082 A1 offenbart einen Ultraschallwandler für ein Durchflussgerät, der ein Gehäuse aufweist, in dem ein piezoelektrischer Ultraschallwandler bodenseitig innerhalb des Gehäuses fest angeordnet ist. Zudem sind im Gehäuse eine elektrische Leiterplatte sowie ein elektrisch leitendes Federvorspannelement eingebracht, letzteres kontaktiert den Ultraschallwandler rückseitig. Zudem ist innerhalb einer Bohrung des Gehäuses ein Stecker eingebracht, der ebenfalls mit einem separaten Federvorspannelement den Ultraschallwandler rückseitig kontaktiert.

Die Druckschrift WO 1999/10110 A1 offenbart einen Ultraschallwandler, bei dem zu Zwecken einer elektrisch Spannungsfreien Lagerung des in einem separaten Gehäuse gefassten Ultraschallwandlers ein auf den piezoelektrischen Ultraschallwandler wirkender Federkraft-beaufschlagter Kurzschluss sorgt. Vermittels eines in das Gehäuse eindrehbaren Steckers wird der Kurzschluss gelöst und der Ultraschallwandler in Betrieb genommen.

Die Druckschrift US 2007/0035212 A1 beschreibt einen ultraschallwellen-basierten Flusssensor, der aus drei Komponenten zusammengesetzt ist, nämlich einen Steckerteil, eine Ultraschallwandlereinheit sowie eine Ultraschallwellenkopplungseinheit. Alle drei Komponenten sind über Gewindefügungen lösbar fest miteinander koppelbar.

Die Druckschrift DE 10 2008 002 028 A1 offenbart eine Messzelle, die lösbar an einer dafür vorgesehenen Messvorrichtung anbringbar ist. Der Ultraschallwandler ist über Energieversorgungsleitung innerhalb des flüssigen Messmedium angeordnet.

Die Druckschrift DE 10 2007 027 392 B3 beschreibt ein Verfahren zur Messung von lokalen Strömungsgeschwindigkeiten in flüssigen Schmelzen, bei dem eine Ultraschallwelleneinheit zum Einsatz kommt, wie sie vorstehend unter Bezugnahme auf den in Figur 2 illustrierten Stand der Technik erläutert worden ist.

Die Druckschrift US 3,925,692 offenbart einen Ultraschallwandler bei dem ein Piezoelement Presskraft-beaufschlagt gegen ein metallisches Fensterelement gepresst wird, welches stoffschlüssig mit dem Gehäusekörper im Wege einer Schweißung gefügt ist.

### Darstellung der Erfindung

Der Erfindung liegt die Aufgabe zugrunde, eine Ultraschalleinheit zur Kopplung von Ultraschallwellen in ein und/oder aus einem Medium, umfassend einen an eine Elektronikeinheit elektrisch kontaktierten Ultraschallwandler, der mittel- oder unmittelbar mit einem als Wellenleiter ausgebildeten Koppelmedium verbunden ist, derart auszugestalten, so dass ein materialdegradationsbedingter Austausch der Ultraschalleinheit erheblich weniger zeit- und kostenaufwändig als bisher zu Buche schlägt.

Eine lösungsgemäß ausgebildete Ultraschalleinheit ist im Anspruch 1 angegeben. Die lösungsgemäße Ultraschalleinheit in vorteilhafter Weise ausbildende Merkmale sind Gegenstand der Unteransprüche sowie der weiteren Beschreibung insbesondere unter Bezugnahme auf wenigstens ein zeichnerisch dargestelltes Ausführungsbeispiel zu entnehmen.

Lösungsgemäß zeichnet sich die Ultraschalleinheit zur Kopplung von Ultraschallwellen in ein oder aus einem Medium, umfassend einen mit einer Elektronikeinheit elektrisch kontaktierten Ultraschallwandler, der mittel- oder unmittelbar mit einem als Wellenleiter ausgebildeten Koppelmedium verbunden ist, dadurch aus, dass der Ultraschallwandler lösbar fest im Wege einer Kraft- und/oder Formschlussverbindung mittel- oder unmittelbar mit der Elektronikeinheit gefügt und mit dieser elektrisch verbunden ist. Ferner ist eine Haltestruktur vorgesehen ist, an der wenigstens ein mit der Elektronikeinheit verbundenes oder verbindbares elektrisch leitendes Kontaktmittel angeordnet ist, wobei die die Haltestruktur eine Aufnahmeeinheit aufweist, in die ein Teil des fest mit dem Ultraschallwandler verbundenen Koppelmediums fügbar ist, der mittels einer an der Haltestruktur angebrachten Fixiereinrichtung derart lösbar fest fixierbar ist, dass im gefügten und fixierten Zustand des Koppelmediums in der Aufnahmeeinheit der Haltestruktur wenigstens eine elektrisch leitende Oberfläche des Ultraschallwandlers kraft- und/oder formschlüssig mit dem wenigstens einen Kontaktmittel gefügt ist.

Durch die lösbar feste, elektrisch leitende Verbindung zwischen der Elektronikeinheit und dem Ultraschallwandler, der vorzugsweise in Form eines elektromechanischen Ultraschallwandlers einseitig untrennbar fest mit dem als Wellenleiter ausgebildeten Koppelmedium verbunden ist, eröffnet sich die Möglichkeit nach entsprechendem materialdegradationsbedingten Verschleiß des Wellenleiters nicht die gesamte Ultraschalleinheit auszutauschen und zu entsorgen, sondern lediglich den verbrauchten Wellenleiter gegen einen neuen, unverbrauchten Wellenleiter zu ersetzen.

Zum Zwecke der elektrischen Kontaktierung des untrennbar mit dem Wellenleiter verbundenen, vorzugsweise piezoelektrischen Ultraschallwandlers ist die innerhalb der gehäuseartigen Haltestruktur, im Weiteren als Gehäuse bezeichnet, angeordnete Elektronikeinheit mit einem elektrisch leitenden Kontaktmittel verbunden oder mit diesem verbindbar. Das Gehäuse weist überdies die Aufnahmeeinheit auf, in die ein Teil des fest mit dem Ultraschallwandler verbundenen Wellenleiters fügbar ist, der mittels einer gehäuseseitig im Bereich der Aufnahmeeinheit angebrachten Fixiereinrichtung lösbar fest fixierbar ist. Die mit der Aufnahmeeinheit zusammenwirkende Fixiereinrichtung ist derart ausgebildet, so dass im gefügten und fixierten Zustand des Wellenleiters wenigstens eine elektrisch leitende Oberfläche des Ultraschallwandlers kraft- und/oder formschlüssig mit dem wenigstens einen elektrisch leitenden Kontaktmittel gefügt ist.

In einer bevorzugten Ausführungsform ist das elektrisch leitende Kontaktmittel in Form eines Federkraft-beaufschlagten Kontaktstiftes ausgebildet, der innerhalb des Gehäuses mechanisch auslenkbar gelagert ist und im gefügten und fixierten Zustand des Wellenleiters innerhalb des Gehäuses mit einer elektrisch leitenden Oberfläche des Ultraschallwandlers kraft- und/oder formschlüssig gefügt ist.

Der Betrieb eines elektromechanischen Ultraschallwandlers setzt ein elektrisches Wechselspannungspotenzial längs einer Raumrichtung innerhalb des Wandlermaterials voraus, längs der der Wandler in Folge der applizierten Wechselspannung Längenänderungen ausführt. Hierzu gilt es den zumeist stab-, plättchen- oder scheibenartig oder quader- oder rechteckförmig ausgebildeten Ultraschallwandler an den sich gegenüberliegenden Wandleroberflächen elektrisch zu kontaktieren.

Zum Zwecke einer möglichst verlustfreien elektrischen Kontaktierung ist der typischerweise stab- oder plättchenförmig ausgebildete Ultraschallwandler an seinen zwei sich gegenüber liegenden Wandleroberflächen zumindest bereichsweise jeweils mit einer Metallschicht beschichtet. Im Falle eines piezoelektrischen Ultraschallwandlers eignet sich vorzugsweise jeweils eine Gold- oder Silberbeschichtung.

Im Falle eines aus einem elektrisch leitenden Material bestehenden Wellenleiters kontaktiert das Kontaktmittel den Ultraschallwandler an seiner dem Wellenleiter abgewandten Ultraschallwandleroberfläche. Zur Gewährleistung der längs des Ultraschallwandlers wirkenden elektrischen Potentialdifferenz zwischen beiden sich gegenüberliegenden Ultraschallwandleroberflächen ist die dem Kontaktmittel gegenüber liegende Ultraschallwandleroberfläche elektrisch leitend mit dem elektrisch leitenden Wellenleiter verbunden, der seinerseits über die Fixiereinrichtung und/oder über Bereiche des Gehäuses mit einem elektrischen Massepotential verbunden ist.

Besteht der Wellenleiter hingegen aus einem elektrisch isolierenden Material oder wird zum Fügen des Ultraschallwandlers an den Wellenleiter ein elektrisch isolierender Adhäsionskleber eingesetzt, so bietet es sich an, den Ultraschallwandler jeweils von einer frei zugänglichen Seite elektrisch zu kontaktieren. Hierzu wird die an der rück- bzw. -unterseitigen Ultraschallwandleroberfläche vorgesehene Metallschicht, die mit dem Wellenleiter untrennbar verbunden ist, vermittels einer sogenannten elektrischen Leitungsfahne seitlich zum Ultraschallwandler und/oder auf dessen vordere bzw. obere Ultraschallwandleroberfläche zum Zweck einer frei zugänglichen Elektrodenfläche elektrisch leitend erweitert. Die als Gegenpol dienende Leitungsfahne ist sowohl gegenüber dem Ultraschallwandler sowie der vorderseitig aufgebrachten Metallschicht elektrisch isoliert. Auf diese Weise ist der Ultraschallwandler mittels zwei getrennter elektrischer Kontaktmittel einseitig oder zumindest von frei zugänglichen Seiten elektrisch kontaktierbar. Vorzugsweise kann auch die Fixiereinrichtung zur elektrischen Kontaktierung des Ultraschallwandlers genutzt werden.

Für einen unkomplizierten und schnellen Austausch sowie eine sichere und stabile Lagerung sowie dauerhafte elektrische Kontaktierung des Ultraschallwellenleiters samt des an dessen Stirnseite angebrachten Ultraschallwandlers bietet es sich an, die am Gehäuse vorgesehene Fixiereinrichtung als Klemm- und/oder Rastfügemechanismus auszubilden. Vorzugsweise dienen Befestigungsschrauben zur lösbar festen Klemmung des Ultraschallwellenleiters innerhalb des Gehäuses sowie zur Sicherstellung, dass der stirnseitig am Ultraschallwellenleiter angebrachte Ultraschallwandler sicher und dauerhaft mit dem wenigstens einen innerhalb des Gehäuses vorgesehenen Kontaktmittel verbunden ist und bleibt.

### Kurze Beschreibung der Erfindung

Die Erfindung wird nachstehend ohne Beschränkung des allgemeinen Erfindungsgedankens anhand eines Ausführungsbeispiels unter Bezugnahme auf die Zeichnungen exemplarisch beschrieben. Es zeigen:
- Fig. 1a,b,c: lösungsgemäß ausgebildete Ultraschalleinheit mit vom Gehäuse getrennten Koppelmedium sowie mit innerhalb des Gehäuses fixierten Koppelmediums sowie
- Fig. 2: Illustration einer an sich bekannten Ultraschalleinheit.

### Wege zur Ausführung der Erfindung, gewerbliche Verwendbarkeit

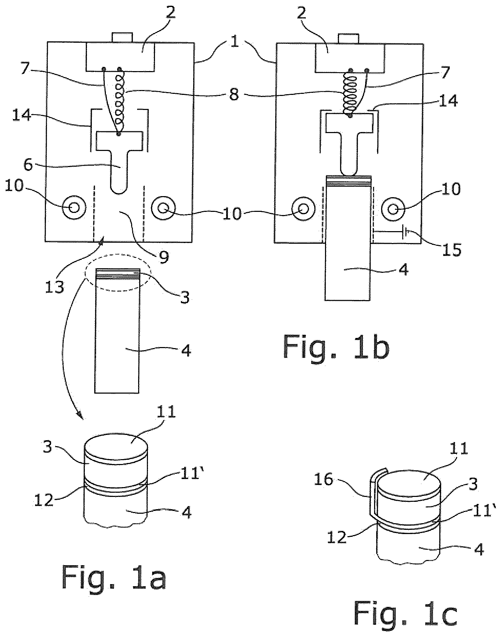

Fig. 1a zeigt eine Ultraschalleinheit mit einem Gehäuse 1, die der eingangs erwähnten Haltestruktur entspricht, einer innerhalb des Gehäuses 1 angeordneten Elektronikeinheit 2 sowie einem elektrischen Kontaktmittel 6, das mit der Elektronikeinheit 2 über ein Verbindungskabel 7 elektrisch verbunden ist und zusätzlich über ein Federelement 8 federkraftbeaufschlagt gelagert ist. Zusätzlich sieht das Gehäuse 1 eine Fixiereinrichtung 9 vor, die in Art eines Klemmmechanismus ausgebildet ist, der mittels zweier Klemmschrauben 10 aus einem losen Zustand in einen geschlossenen Zustand überführbar ist.

In Fig. 1a ist getrennt zum Gehäuse 1 ein als Wellenleiter ausgebildetes Koppelmedium 4, nachstehend als Wellenleiter bezeichnet, illustriert, der stab- oder stangenförmig ausgebildet ist und zwei sich axial gegenüberliegende Stab- bzw. Stangenenden vorsieht, die als Koppelflächen für die Ein- bzw. Auskopplung von Ultraschallwellen dienen. Ebenso sind von der Stab- oder Stangenform abweichende Wellenleiterformen denkbar, bspw. die von Keil-förmiger Gestalt sind und über eine entsprechend geformte Befestigungskontur zum Anschluss an die Fixiereinrichtung verfügen.

An der oberen Koppelfläche des Wellenleiters 4 ist ein scheiben- bzw. plättchenförmiger Ultraschallwandler 3 fest angebracht. Anhand der in Fig. 1a illustrierten Detaildarstellung ist das obere Ende des Wellenleiters 4 vergrößert dargestellt. Die Ober- und Unterseite des scheibchenartig ausgebildeten, vorzugsweise piezoelektrischen Ultraschallwandlers 3 sind jeweils zum Zwecke einer verlustfreien elektrischen Kontaktierung mit vorzugsweise einer Goldschicht 11, 11' beschichtet. Zur festen Anhaftung des Ultraschallwandlers 3 an der oberen Koppelfläche des Wellenleiters 4 dient eine zusätzliche Adhäsivkleberschicht 12. Um den Wellenleiter 4 zusammen mit dem Ultraschallwandler 3 innerhalb des Gehäuses 1 fest zu fügen und mit der Elektronikeinheit 2 sicher und dauerhaft elektrisch zu kontaktieren, wird der Wellenleiter 4 stirnseitig in eine innerhalb des Gehäuses 1 vorgesehene untere Öffnung 13 geschoben, die Teil der Fixiereinheit 9 ist. Während des Einschiebevorganges gerät das federkraftbeaufschlagte Kontaktmittel 6 in Kontakt mit der elektrisch leitenden Oberfläche des Ultraschallwandlers 3 und wird bis zu Erreichen eines mechanischen Anschlages 14 gegen die im Wege der Federkomprimierung wirkenden Kraft innerhalb des Gehäuses 1 bewegt. Bei Erreichen des mechanischen Anschlages 14 wird der Wellenleiter 4 durch Fixieren der Fixierschrauben 10 innerhalb der Fixiereinheit 9 lösbar fest gefügt. Durch die Federkompression des Federelementes 8 ist sichergestellt, dass der elektrisch leitende Kontaktstift 6 kraft- und formschlüssig an der stirnseitigen, metallbeschichteten Oberfläche des Ultraschallwandlers 3 unter Ausbildung eines verlustfreien elektrischen Kontaktes dauerhaft anliegt.

Vermittels des erläuterten, federnd gelagerten Kontaktmechanismus zwischen Elektronikeinheit 2 und Ultraschallwandler 4 wird ein Austausch des Ultraschallwandler 4 erheblich vereinfacht und für die tägliche industrielle Praxis tauglich gemacht. Der Kontaktstift 6 kann grundsätzlich entweder mit dem Massenpotential oder mit der elektrischen Phase verbunden werden. Aus Sicherheitsgründen bietet es sich an, den Kontaktstift 6 mit der elektrischen Phase zu belegen. Als Gegenpol dient bei elektrisch leitfähigen Koppelmedien 4 das Gehäuse 1 als Massenpotential 15.

Im Falle elektrisch nicht leitfähiger Koppelmedien 4 oder beim Einsatz nicht leitfähiger Adhäsivkleber gilt es die elektrische Kontaktierung des Ultraschallwandlers 3 mit Hilfe einer Leiterfahne 16 zu realisieren, die mit einer gehäuseseitigen Gegenkontaktierung in Kontakt tritt, siehe Figur 1c. Die Leiterfahne 16 ist elektrisch mit der unteren Metallschichtung 11' des Ultraschallwandlers 3 verbunden und ansonsten elektrisch isoliert gegenüber dem Ultraschallwandler 3 angeordnet. Auch ist es denkbar, die Leiterfahne 16 an die obere Kontaktfläche des Ultraschallwandlers 3 zu führen, an der sie elektrisch isoliert gegenüber der bestehenden Metallschicht 11 an der oberen Kontaktfläche des Ultraschallwandlers angeordnet ist. In diesem Fall ist eine Kontaktierung beider Metallschichten von einer einheitlichen Seite des Ultraschallwandlers beispielsweise mit Hilfe zweier elektrisch isoliert angeordneter, federkraftbeaufschlagter Kontaktstifte denkbar.

Der lösungsgemäße Aufbau der lösungsgemäßen Ultraschalleinheit dient zum schnellen und leichten Austausch eines verbrauchten Wellenleiters 4 gegen einen unverbrauchten Wellenleiter, der nach entsprechender Fixierung innerhalb des Gehäuses sofort einsatzfähig ist.

Das erläuterte Prinzip der flexiblen Kontaktierung eines piezoelektrischen Ultraschallwandlers mit Hilfe eines federnd gelagerten Kontaktstiftes kann prinzipiell auf sämtliche Ultraschallsensoriken übertragen werden. Dies vereinfacht zum einen die Fertigung und ermöglicht darüber hinaus neue und kostengünstige Sensorkonzepte mit flexibel austauschbaren Sensoren wobei das Grundgehäuse mit samt Elektronik beibehalten werden kann.

Selbstverständlich stellt das illustrierte Ausführungsbeispiel keine Beschränkung auf die konkret angegebene Bauform bspw. das Gehäuse 1 oder den Wellenleiter 4 betreffend, dar. Auch sind von der Stangenform abweichende Wellenleiterformen bekannt und denkbar, bspw. eine vom Gehäuse ausgehende, sich keilförmig erweiternde Wellenleiterform, deren untere, mit einem Medium in Kontakt tretende Koppelfläche gegenüber der oberen Koppelfläche geneigt und/oder strukturiert oder geometrisch gekrümmt ausgebildet ist.

### Bezugszeichenliste

- 1: Gehäuse, Haltestruktur
- 2: Elektronikeinheit
- 3: Ultraschallwandler
- 4: Koppelmedium, Wellenleiter
- 5: Steckverbinder
- 6: Kontaktstift
- 7: Elektrische Verbindungsleiter
- 8: Federelement
- 9: Fixiereinheit
- 10: Fixierschrauben
- 11, 11': Metallschicht, Goldschicht
- 12: Adhäsivkleber
- 13: Einschuböffnung
- 14: Mechanischer Anschlag
- 15: Massepotential
- 16: Leiterfahne

## Patentansprüche

1. Ultraschalleinheit zur Kopplung von Ultraschallwellen in ein und/oder aus einem Medium, umfassend einen an eine Elektronikeinheit (2) elektrisch kontaktierten Ultraschallwandler (3), der mittel- oder unmittelbar mit einem, mit dem Medium in Kontakt tretenden Wellenleiter (4) verbunden ist,
**dadurch gekennzeichnet, dass** innerhalb eines Gehäuses (1) die Elektronikeinheit (2), sowie wenigstens ein mit der Elektronikeinheit (2) verbundenes oder verbindbares elektrisch leitendes Kontaktmittel (6) sowie eine Aufnahmeeinheit mit einer Fixiereinrichtung (9) angeordnet sind,
dass ein Teil des fest mit dem Ultraschallwandler (3) verbundenen Wellenleiters (4) mittels der am Gehäuse (1) angebrachten Fixiereinrichtung (9) lösbar fest fixierbar ist, und
dass im gefügten und fixierten Zustand des Wellenleiters (4) in der Aufnahmeeinheit mittels der Fixiereinrichtung (9) wenigstens eine elektrisch leitende Oberfläche des Ultraschallwandlers (3) kraft- und/oder formschlüssig mit dem wenigstens einen Kontaktmittel (6) gefügt ist und die Elektronikeinheit (2) den Ultraschallwandler lösbar-fest elektrisch kontaktiert.

2. Ultraschalleinheit nach Anspruch 1,
**dadurch gekennzeichnet, dass** der Ultraschallwandler (3) ein elektromechanischer Ultraschallwandler ist.

3. Ultraschalleinheit nach Anspruch 1 oder 2,
**dadurch gekennzeichnet, dass** der Ultraschallwandler (3) mittels eines Adhäsiv-Klebers dauerhaft fest an den Wellenleiter (4) gefügt ist.

4. Ultraschalleinheit nach einem der Ansprüche 1 bis 3,
**dadurch gekennzeichnet, dass** der Wellenleiter (4) eine erste Koppelfläche besitzt, an der der Ultraschallwandler (3) fest angebracht ist.

5. Ultraschalleinheit nach Anspruch 4,
**dadurch gekennzeichnet, dass** der Wellenleiter (4) gegenüberliegend zur ersten Koppelfläche eine zweite Koppelfläche vorsieht, die parallel oder geneigt zur ersten Koppelfläche orientiert ist.

6. Ultraschalleinheit nach Anspruch 4 oder 5,
**dadurch gekennzeichnet, dass** der Wellenleiter (4) stangenförmig ausgebildet ist mit einem die erste Koppelfläche aufweisenden oberen Stangenende.

7. Ultraschalleinheit nach einem der Ansprüche 1 bis 6,
**dadurch gekennzeichnet, dass** das elektrisch leitende Kontaktmittel (6) ein Federkraft-beaufschlagter Kontaktstift ist, der in dem Gehäuse (1) mechanisch auslenkbar gelagert ist.

8. Ultraschalleinheit nach einem der Ansprüche 1 bis 7,
**dadurch gekennzeichnet, dass** der Wellenleiter (4) aus einem elektrisch leitenden Material besteht, und
dass der Wellenleiter (4) über die Fixiereinrichtung (9) und/oder das Gehäuse (1) mit einem elektrischen Massepotenzial (15) verbunden ist.

9. Ultraschalleinheit nach einem der Ansprüche 1 bis 7,
**dadurch gekennzeichnet, dass** der Wellenleiter (4) aus einem elektrisch isolierenden Material besteht oder der Wellenleiter (4) elektrisch leitend ist und der Ultraschallwandler (3) elektrisch isolierend gegenüber dem Wellenleiter (4) fest an diesem angebracht ist, und
dass ein zweites, an dem Gehäuse (1) angeordnetes Kontaktmittel (16) angebracht ist, das mit einer am Ultraschallwandler (3) angebrachten, als Gegenpol ausgebildeten elektrisch leitenden Oberfläche im gefügten und fixierten Zustand des Wellenleiters (4) in der Aufnahmeeinheit kraft- und oder formschlüssig gefügt ist.

10. Ultraschalleinheit nach einem der Ansprüche 1 bis 9,
**dadurch gekennzeichnet, dass** der Ultraschallwandler (3) stab- oder plättchenförmig ausgebildet ist und zwei gegenüberliegende Oberflächen besitzt, die jeweils mit einer Metallschicht zumindest bereichsweise beschichtet sind.

11. Ultraschalleinheit nach Anspruch 9 und 10,
**dadurch gekennzeichnet, dass** beide Metallschichten elektrisch isoliert voneinander an einer gemeinsamen Oberfläche des Ultraschallwandlers (3) mittels der Kontaktmittel (6, 16) kontaktierbar sind.

## Claims

1. Ultrasonic unit for coupling ultrasonic waves into and/or from a medium, comprising an ultrasonic transducer (3) which is electrically contacted to an electronics unit (2), and which is directly or indirectly connected to a waveguide (4) that makes contact with the medium, **characterized in that** the electronics unit (2) as well as at least one electrically conductive contact means (6) connected or connectable to the electronics unit (2) and a holding unit with a fixing device (9) are arranged inside a housing (1), that a part of the waveguide (4) that is fixedly connected to the ultrasonic transducer (3) can be attached detachably in fixed manner by means of the fixing device (9) mounted on the housing (1), and that when the waveguide (4) is in the attached and fixed state in the holding unit by means of the fixing device (9), at least one electrically conductive surface of the ultrasonic transducer (3) is attached with the at least one contact means (6) by means of a non-positive and/or positive connection, and the electronics unit (2) enters into detachable-fixed electrical contact with the ultrasonic transducer.

2. Ultrasonic unit according to Claim 1, **characterized in that** the ultrasonic transducer (3) is an electromechanical ultrasonic transducer.

3. Ultrasonic unit according to Claim 1 or 2, **characterized in that** the ultrasonic transducer (3) is attached permanently and fixedly to the waveguide (4) by means of an adhesive bonding material.

4. Ultrasonic unit according to any one of Claims 1 to 3, **characterized in that** the waveguide (4) has a first coupling surface, to which the ultrasonic transducer (3) is fixedly attached.

5. Ultrasonic unit according to Claim 4, **characterized in that** the waveguide (4) provides a second coupling surface situated opposite the first coupling surface, which is aligned parallel to or at an angle to the first coupling surface.

6. Ultrasonic unit according to Claim 4 or 5, **characterized in that** the waveguide (4) is rod-shaped with an upper rod end that includes the first coupling surface.

7. Ultrasonic unit according to any one of Claims 1 to 6, **characterized in that** the electrically conductive contact means (6) is a spring force-loaded contact pin which is mounted in the housing (1) in such manner that it can be deflected mechanically.

8. Ultrasonic unit according to any one of Claims 1 to 7, **characterized in that** the waveguide (4) is made from an electrically conductive material, and that the waveguide (4) is connected to an electrical earth potential (15) via the fixing device (9) and/or the housing (1).

9. Ultrasonic unit according to any one of Claims 1 to 7, **characterized in that** the waveguide (4) is made from an electrically insulating material or the waveguide (4) is electrically conductive and the ultrasonic transducer (3) is attached to the waveguide (4) in an electrically insulating manner, and that a second contact means (16) is arranged on the housing (1), and when the waveguide (4) is in the attached and fixed state in the holding unit said second contact means is joined by a non-positive and/or positive connection to an electrically conductive surface that is attached to the ultrasonic transducer (3) and embodied as a counterpole.

10. Ultrasonic unit according to any one of Claims 1 to 9, **characterized in that** the ultrasonic transducer (3) is rod-shaped or plate-shaped, and has two opposing surfaces, each of which is coated with a metal layer in at least a region thereof.

11. Ultrasonic unit according to Claims 9 and 10, **characterized in that** the two metal layers are electrically insulated from one another and can be contacted by means of the contact means (6, 16) on a common surface of the ultrasonic transducer (3).

## Revendications

1. Unité à ultrasons pour coupler des ondes à ultrasons dans et/ou à partir d'un milieu, comprenant un transducteur à ultrasons (3) en contact électrique avec une unité électronique (2), qui est directement ou indirectement connectée à un milieu venant en contact du guide d'ondes (4), **caractérisée en ce qu'**à l'intérieur d'un boîtier (1)sont agencés l'unité électronique (2) et au moins un moyen de contact électriquement conducteur (6) connecté ou connectable avec l'unité électronique (2) ainsi qu'une unité de réception avec un dispositif de fixation (9), de sorte qu'une partie du guide d'ondes (4) fermement connectée au transducteur à ultrasons (3) peut être fixée de manière amovible au moyen du dispositif de fixation (9) fixé au boîtier (1), et qu'en l'état joint et fixe du guide d'ondes (4) dans l'unité de réceptacle au moins une surface électriquement conductrice du transducteur à ultrasons (3) est jointe à au moins un moyen de contact (6) par conjonction de force et/ou de forme au moyen du dispositif de fixation (9) et l'unité électronique (2) contacte électriquement le transducteur à ultrasons de manière amovible-fixe.

2. Unité à ultrasons selon la revendication 1, **caractérisée en ce que** le transducteur à ultrasons (3) est un transducteur à ultrasons électromécanique.

3. Unité à ultrasons selon la revendication 1 ou 2, **caractérisée en ce que** le transducteur à ultrasons (3) est fixé durablement sur le guide d'ondes (4) au moyen d'un adhésif.

4. Unité à ultrasons selon une des revendications 1 à 3, **caractérisée en ce que** le guide d'onde (4) comporte une première surface de couplage sur laquelle le transducteur à ultrasons (3) est solidement fixé.

5. Unité à ultrasons selon la revendication 4, **caractérisé en ce que** le guide d'ondes (4) fournit une deuxième surface de couplage opposée à la première surface de couplage, qui est orientée de manière parallèle ou inclinée par rapport à la première surface de couplage.

6. Unité à ultrasons selon la revendication 4 ou 5, **caractérisée en ce que** le guide d'onde (4) est en forme de tige avec une extrémité de tige supérieure présentant la première surface de couplage.

7. Unité à ultrasons selon une des revendications 1 à 6, **caractérisée en ce que** le moyen de contact électriquement conducteur (6) est une broche de contact actionnée par ressort qui est montée dans le boîtier (1) de manière à pouvoir être déviée mécaniquement.

8. Unité à ultrasons selon une des revendications 1 à 7, **caractérisée en ce que** le guide d'onde (4) est constitué d'un matériau électriquement conducteur, et que le guide d'ondes (4) est relié via le dispositif de fixation (9) et/ou le boîtier (1) à un potentiel électrique de masse (15).

9. Unité à ultrasons selon une des revendications 1 à 7, **caractérisée en ce que** le guide d'onde (4) est constitué d'un matériau électriquement isolant ou le guide d'onde (4) est électriquement conducteur et le transducteur à ultrasons (3) est électriquement isolant par rapport au guide d'ondes (4) qui lui est fixé, et **en ce qu'**un deuxième moyen de contact (16) disposé sur le boîtier (1) est fixé, qui est joint à l'unité de réceptacle par conjonction de force et/ou de forme par une surface électriquement conductrice fixée au transducteur à ultrasons (3) et conçue comme un contre-pôle lorsque le guide d'ondes (4) est dans l'état joint et fixe.

10. Unité à ultrasons selon une des revendications 1 à 9, **caractérisée en ce que** le transducteur à ultrasons (3) est en forme de tige ou en forme de plaque et présente deux surfaces opposées, qui sont respectivement revêtues au moins par portions d'une couche métallique.

11. Unité à ultrasons selon la revendication 9 et 10, **caractérisée en ce que** les deux couches métalliques peuvent être contactées de manière isolée électriquement l'une de l'autre sur une surface commune du transducteur à ultrasons (3) au moyen des moyens de contact (6, 16).
